(19) Europäisches Patentamt / European Patent Office / Office européen des brevets

(11) **EP 4 455 475 A1**

(12) **EUROPEAN PATENT APPLICATION**
published in accordance with Art. 153(4) EPC

(43) Date of publication:
**30.10.2024 Bulletin 2024/44**

(21) Application number: **22910814.7**

(22) Date of filing: **01.12.2022**

(51) International Patent Classification (IPC):
*F02M 35/10* (2006.01)    *C08K 3/01* (2018.01)
*C08K 3/26* (2006.01)    *C08K 5/14* (2006.01)
*C08L 27/12* (2006.01)    *F02M 25/00* (2006.01)

(52) Cooperative Patent Classification (CPC):
**C08K 3/01; C08K 3/26; C08K 5/14; C08L 15/02;**
**C08L 27/12; F02M 25/00; F02M 35/10;** Y02T 10/30

(86) International application number:
**PCT/JP2022/044426**

(87) International publication number:
**WO 2023/120097 (29.06.2023 Gazette 2023/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.12.2021 JP 2021209617**

(71) Applicant: DAIKIN INDUSTRIES, LTD.
**Osaka-shi, Osaka 530-0001 (JP)**

(72) Inventors:
• **KAWASAKI, Kazuyoshi**
  **Osaka-Shi, Osaka 530-0001 (JP)**
• **TAKEMURA, Kouhei**
  **Osaka-Shi, Osaka 530-0001 (JP)**
• **KAWAI, Satoshi**
  **Osaka-Shi, Osaka 530-0001 (JP)**
• **USHIJIMA, Takeru**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **CROSSLINKABLE COMPOSITION, MEMBER, AND USE OF CROSSLINKABLE COMPOSITION**

(57)    Provided is a crosslinkable composition for use in a member of an air management system for an ammonia combustion engine, the composition containing a fluoroelastomer and a cross-linking agent, and further containing hydrotalcite as an acid acceptor, or containing or not containing an acid acceptor other than hydrotalcite as an acid acceptor, wherein the content of the acid acceptor other than hydrotalcite is 0 parts by mass or more and less than 1 part by mass based on 100 parts by mass of the fluoroelastomer.

**EP 4 455 475 A1**

**Description**

TECHNICAL FIELD

The present disclosure relates to a crosslinkable composition for use in a member of an air management system for an ammonia combustion engine, a member of an air management system for an ammonia combustion engine, and use of the crosslinkable composition.

BACKGROUND ART

Patent Document 1 describes a curable fluoroelastomer composition containing A) a curable fluoroelastomer; B) a curing agent; and C) an acid acceptor selected from the group consisting of hydrous bismuth oxide nitrate compounds and bismuth oxide.

RELATED ART

PATENT DOCUMENTS

Patent Document 1: Japanese Translation of PCT International Application Publication No. 2013-534271

SUMMARY OF THE INVENTION

PROBLEM TO BE SOLVED BY THE INVENTION

An object of the present disclosure is to provide a crosslinkable composition which allows to provide a member of an air management system for an ammonia combustion engine, the member having excellent resistance to nitric acid.

MEANS FOR SOLVING THE PROBLEM

The present disclosure provides a crosslinkable composition for use in a member of an air management system for an ammonia combustion engine, the composition containing a fluoroelastomer and a cross-linking agent, and further

(a) containing a hydrotalcite as an acid acceptor, or
(b) containing or not containing an acid acceptor other than a hydrotalcite as an acid acceptor, wherein the content of the acid acceptor other than the hydrotalcite is 0 parts by mass or more and less than 1 part by mass based on 100 parts by mass of the fluoroelastomer.

In the case of (a), the content of the hydrotalcite is preferably 0.1 to 10 parts by mass based on 100 parts by mass of the fluoroelastomer.
In the case of (a), the content of the acid acceptor other than the hydrotalcite is preferably 0 parts by mass or more and less than 1 part by mass based on 100 parts by mass of the fluoroelastomer.
In the case of (b), the content of the hydrotalcite is preferably less than 0.1 parts by mass based on 100 parts by mass of the fluoroelastomer.
In the case of (b), the acid acceptor other than the hydrotalcite is preferably at least one selected from the group consisting of metal oxides, metal hydroxides, alkali metal silicates, and weak acid metal salts.
The fluoroelastomer is preferably a peroxide-crosslinkable fluoroelastomer.
The fluoroelastomer is preferably at least one selected from the group consisting of vinylidene fluoride-based fluoroelastomers, tetrafluoroethylene/propylene-based fluoroelastomers, and perfluoroelastomers.
The fluoroelastomer is preferably at least one selected from the group consisting of a fluoroelastomer (1) containing a vinylidene fluoride unit and a fluorine-containing monomer (1) unit represented by the following general formula (1):

$$CHX^1 = CX^2Rf \qquad (1)$$

wherein one of $X^1$ and $X^2$ is H and the other is F, and Rf is a linear or branched fluoroalkyl group having 1 to 12 carbon atoms; and a tetrafluoroethylene/propylene-based fluoroelastomer.
The fluorine-containing monomer (1) is preferably 2,3,3,3-tetrafluoropropene.
The fluoroelastomer (1) preferably has at least one of iodine atom and bromine atom, wherein the total content of iodine and bromine atoms is 0.001 to 10 mass%.

The cross-linking agent is preferably a peroxide.

A co-cross-linking agent is preferably further contained.

The present disclosure also provides a member of an air management system for an ammonia combustion engine, the member containing a crosslinked fluoroelastomer obtained by crosslinking the above crosslinkable composition.

The present disclosure also provides use of the above crosslinkable composition for forming a member of an air management system for an ammonia combustion engine.

EFFECTS OF INVENTION

The present disclosure can provide a crosslinkable composition which allows to provide a member of an air management system for an ammonia combustion engine, the member having excellent resistance to nitric acid.

DESCRIPTION OF EMBODIMENTS

Hereinafter, specific embodiments of the present disclosure will now be described in detail, but the present disclosure is not limited to the following embodiments.

Ammonia is showing promise as an alternative fuel for use in combustion engines as it does not generate carbon dioxide when combusted. When ammonia is combusted in a combustion engine, the exhaust gas emitted from the combustion engine usually contains higher concentrations of nitrogen oxides than in conventional combustion engines where only fossil fuels are used, and the nitrogen oxides are readily converted to nitric acid by moisture. The nitric acid thus generated has the problem of swelling the elastomer member used in the air management system of the combustion engine.

Patent Document 1 describes that a fluoroelastomer article obtained from a curable fluoroelastomer composition having the above composition exhibits surprisingly low volume swelling, i.e., less than 10% by volume, preferably less than 5% by volume, when exposed to dilute acids, cooling fluids or biofuels for long periods and/or at high temperatures.

However, the members of air management systems for conventional combustion engines using biofuels do not have sufficient swelling resistance to high concentrations of nitric acid. Therefore, there is a need for a crosslinkable composition that provides a member that has sufficient swelling resistance to high concentrations of nitric acid and will not swell or be damaged when used as a member of an air management system for an ammonia combustion engine.

It has now been found that by appropriately selecting the type of acid acceptor used in the crosslinkable composition, the content of the acid acceptor, and the like, the swelling resistance of the resulting crosslinked product to nitric acid is significantly improved, and excellent swelling resistance is exhibited even when in contact with high concentrations of nitric acid produced by the ammonia combustion engine. According to new findings, a crosslinked product obtained from a crosslinkable composition in which the type of acid acceptor, the content of the acid acceptor, and the like, have been appropriately selected, does not swell significantly and retains its original shape even when immersed for a long time, for example, in a highly concentrated nitric acid solution of 5 mass% or more at a temperature of 80°C or more.

That is, the crosslinkable composition of the present disclosure is a composition to be used to form a member of an air management system for an ammonia combustion engine, and allows to provide a crosslinked product with significantly improved swelling resistance to nitric acid generated from ammonia combustion engines by appropriately selecting the type of acid acceptor, the content of the acid acceptor, and the like.

An ammonia combustion engine means an engine that converts the heat generated by combusting ammonia into mechanical energy, and may be either an internal combustion engine or an external combustion engine, as long as it uses ammonia as fuel. The ammonia combustion engine may be a combustion engine that combusts only ammonia as fuel, or may be a combustion engine that co-combusts a mixture of other compounds such as methane or coal and ammonia. Ammonia combustion engines are used, for example, in automobiles, ships, and generators. The ammonia combustion engine may be a small diesel combustion engine used in automobiles and ships. The concentration of ammonia in the above fuel is 1 to 100% by volume.

An air management system is a system within which gas circulates, and examples thereof include air filters, turbochargers, intercoolers, intake manifolds, and exhaust gas recirculation coolers that are accessories to common engines (automobiles, ships, construction machinery, etc.).

A member of an air management system is a member constituting an air management system, and includes members directly connected to the air management system. Examples thereof include air ducts, turbocharger hoses, EGR (exhaust gas recirculation) hoses and seals, intercooler hoses and seals, intake manifold seals, oxygen sensor hoses and seals, and other sensor hoses and seals. The ambient temperature at which the member of the air management system is used is not limited, but is preferably 0 to 200°C, and more preferably 0 to 150°C.

The gases circulating inside the air management system include the nitrogen oxides in the combustion gases of ammonia and nitric acid produced from the nitrogen oxides. The crosslinked fluoroelastomer obtained from the crosslinkable composition of the present disclosure has excellent swelling resistance to nitric acid, and is therefore less likely to swell even when in contact with combustion gases containing nitric acid. Therefore, the crosslinkable composition of the present disclosure can be suitably used for a member that comes into contact with exhaust gases emitted from an ammonia combustion engine, in particular. Examples of members that come into contact with exhaust gas include members commonly used in exhaust systems of combustion engines, such as hoses and sealing materials.

The crosslinkable composition of the present disclosure contains a fluoroelastomer and a cross-linking agent.

Furthermore, the first crosslinkable composition of the present disclosure contains a hydrotalcite as an acid acceptor. When the crosslinkable composition contains hydrotalcite, the swelling resistance of the crosslinked product obtained from the crosslinkable composition to high concentrations of nitric acid is significantly improved compared to when other acid acceptors are used, and the crosslinked product has excellent resistance to ammonia and urea, which allows the first crosslinkable composition of the present disclosure to be suitably used as a material for forming a member of an air management system for an ammonia combustion engine. Resistance to urea is a property required for members, for example, when a urea catalyst is used in a urea-SCR system.

In the first crosslinkable composition of the present disclosure, the content of hydrotalcite is preferably 0.1 to 10 parts by mass, more preferably 0.5 parts by mass or more, still more preferably 1 part by mass or more, and more preferably 8 parts by mass or less, and still more preferably 6 parts by mass or less based on 100 parts by mass of the fluoroelastomer, due to the excellent resistance of the member to ammonia and urea.

The first crosslinkable composition of the present disclosure may or may not contain an acid acceptor other than hydrotalcite. The content of the acid acceptor other than hydrotalcite is preferably 0 to 1 part by mass, more preferably 0 parts by mass or more and less than 1 part by mass, still more preferably 0 to 0.5 parts by mass or less, further still more preferably 0 to 0.1 parts by mass, and particularly preferably 0 parts by mass based on 100 parts by mass of the fluoroelastomer, as it further improves the resistance of the member to nitric acid.

The second crosslinkable composition of the present disclosure contains or not contains an acid acceptor other than a hydrotalcite, and when it contains an acid acceptor other than hydrotalcite, the content thereof is less than 1 part by mass based on 100 parts by mass of the fluoroelastomer. When the content of the acid acceptor other than hydrotalcite in the crosslinkable composition is reduced, the swelling resistance of the crosslinked product obtained from the crosslinkable composition to high concentrations of nitric acid is significantly improved, which allows the second crosslinkable composition of the present disclosure to be suitably used as a material for forming a member of an air management system for an ammonia combustion engine.

In the second crosslinkable composition of the present disclosure, the content of the acid acceptor other than hydrotalcite is 0 parts by mass or more and less than 1 part by mass, more preferably 0 to 0.5 parts by mass or less, still more preferably 0 to 0.1 parts by mass, and particularly preferably 0 parts by mass based on 100 parts by mass of the fluoroelastomer, as it further improves the resistance of the member to nitric acid.

The second crosslinkable composition of the present disclosure is preferably substantially free of hydrotalcite. The content of hydrotalcite in the second crosslinkable composition of the present disclosure is preferably 0 parts by mass or more and less than 1 part by mass, more preferably 0 to 0.5 parts by mass or less, still more preferably 0 to 0.1 parts by mass, further still more preferably less than 0.1 parts by mass, and particularly preferably 0 parts by mass based on 100 parts by mass of the fluoroelastomer.

The hydrotalcite used in the present disclosure is not limited, but is more preferably a compound represented by the general formula:

$$[(M_i^{2+})_{1-x}M^{3+}_x(OH)_2]^{x+}[A^{n-}_{x/n}\cdot mH_2O]^{x-}$$

wherein $M_2^{2+}$ is a divalent metal ion, $M^{3+}$ is a trivalent metal ion, $A^{n-}$ is an n-valent anion, x is a number satisfying $0 < x < 0.5$, and m is a number satisfying $0 \leq m$, from the viewpoint of availability. The hydrotalcite may be either natural or synthetic.

$M_2^{2+}$ indicates a divalent metal ion, such as $Mg^{2+}$, $Mn^{2+}$, $Fe^{2+}$, $Co^{2+}$, $Ni^{2+}$, $Cu^{2+}$, or $Zn^{2+}$. Of these, $Mg^{2+}$ and/or $Zn^{2+}$ are preferred from the viewpoint of their easy availability.

$M^{3+}$ indicates a trivalent metal ion, such as $Al^{3+}$, $Fe^{3+}$, $Cr^{3+}$, $Co^{3+}$, or $In^{3+}$. Of these, $Al^{3+}$ is preferred from the viewpoint of its easy availability.

$A^{n-}$ indicates an n-valent anion, such as OH-, F-, Cl-, Br-, $NO_3^-$, $CO_3^{2-}$, $SO_4^{2-}$, $Fe(CN)_6^{3-}$, $CH_3COO^-$, oxalate ion or salicylate ion. Of these, $CO_3^{2-}$ is preferred from the viewpoint of its easy availability.

In the above formula, it is particularly preferred that $M_2^{2+}$ be $Mg^{2+}$ and/or $Zn^{2+}$, $M^{3+}$ be $Al^{3+}$, and $A^{n-}$ be $CO_3^{2-}$.

x is a number satisfying $0 < x < 0.5$, preferably a number satisfying $0.2 \leq x \leq 0.4$, and more preferably a number satisfying $0.2 \leq x \leq 0.33$. The formation of hydrotalcite is stable when x is in this range.

m is a number satisfying $0 \leq m$ and is preferably a number satisfying $0 \leq m \leq 1$.

Hydrotalcite is a non-stoichiometric compound represented by the above formula, of which at least one compound selected from the group consisting of $Mg_6Al_2(OH)_{16}CO_3 \cdot 4H_2O$, $Mg_{4.5}Al_2(OH)_{13}CO_3 \cdot mH_2O$ ($0 \leq m$), $Mg_4Al_2(OH)_{12}CO_3 \cdot 3.5H_2O$, $Mg_{4.3}Al_2(OH)_{12.6}CO_3 \cdot mH_2O$ ($0 \leq m$), $Mg_5Al_2(OH)_{14}CO_3 \cdot 4H_2O$, $Mg_3Al_2(OH)_{10}CO_3 \cdot 1.7H_2O$, and $Mg_3ZnAl_2(OH)_{12}CO_3 \cdot mH_2O$ ($0 \leq m$) is preferred, and at least one compound selected from the group consisting of $Mg_6Al_2(OH)_{16}CO_3 \cdot 4H_2O$, $Mg_{4.5}Al_2(OH)_{13}CO_3 \cdot 3.5H_2O$, $Mg_{4.3}Al_2(OH)_{12.6}CO_3 \cdot mH_2O$ ($0 \leq m$), and $Mg_3ZnAl_2(OH)_{12}CO_3 \cdot mH_2O$ ($0 < m$) is more preferred from the viewpoint of their easy availability.

The first crosslinkable composition of the present disclosure and the second crosslinkable composition of the present disclosure may or may not contain an acid acceptor other than hydrotalcite. Examples of the acid acceptor other than hydrotalcite include metal oxides such as magnesium oxide, calcium oxide, bismuth oxide, and zinc oxide; metal hydroxides such as calcium hydroxide; alkali metal silicates disclosed in Japanese Translation of PCT International Application Publication No. 2011-522921 such as sodium metasilicate; and metal salts of weak acids disclosed in Japanese Patent Laid-Open No. 2003-277563. Examples of the metal salts of weak acids include carbonates, benzoates, oxalates, and phosphites of Ca, Sr, Ba, Na, and K.

The acid acceptor is preferably at least one selected from the group consisting of metal oxides, metal hydroxides, alkali metal silicates, and weak acid metal salts.

The crosslinkable composition of the present disclosure contains a fluoroelastomer. The fluoroelastomer in the present disclosure, is an amorphous fluoropolymer. The term "amorphous" means that a fluoropolymer has a melting peak ($\Delta H$) of 4.5 J/g or lower as determined by differential scanning calorimetry (DSC) (temperature-increasing rate: 10°C/min) or differential thermal analysis (DTA) (temperature-increasing rate: 10°C/min). The fluoroelastomer exhibits elastomeric characteristics by being crosslinked. Elastomeric characteristics mean such characteristics that the polymer can be stretched, and retain its original length when the force required to stretch the polymer is no longer applied.

The fluoroelastomer may be a partially fluorinated elastomer or a perfluoroelastomer.

The partially fluorinated elastomer in the present disclosure, means a fluoropolymer containing a fluoromonomer unit, having a perfluoromonomer unit content of less than 90 mol% based on all polymerized units, having a glass transition temperature of 20°C or lower, and having a melting peak ($\Delta H$) of 4.5 J/g or lower.

The perfluoroelastomer (perfluororubber) in the present disclosure, means a fluoropolymer having a perfluoromonomer unit content of 90 mol% or more, preferably 91 mol% or more based on all polymerized units, having a glass transition temperature of 20°C or lower, having a melting peak ($\Delta H$) of 4.5 J/g or lower, and having a fluorine atom concentration in the fluoropolymer of 71 mass% or more, preferably 71.5 mass% or more. The fluorine atom concentration in the fluoropolymer in the present disclosure, is the concentration (mass%) of the fluorine atoms contained in the fluoropolymer calculated based on the type and content of each monomer constituting the fluoropolymer.

The perfluoromonomer in the present disclosure, means a monomer free from a carbon-hydrogen bond in the molecule. The perfluoromonomer may be a monomer containing carbon atoms and fluorine atoms in which some of the fluorine atoms bonded to any of the carbon atoms are replaced by chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all hydrogen atoms are replaced by fluorine atoms. The perfluoromonomer does not encompass a monomer that provides a crosslinking site.

The monomer that provides a crosslinking site is a monomer (cure-site monomer) having a crosslinkable group that provides the fluoropolymer with a crosslinking site for forming a crosslink with the cross-linking agent.

The fluoroelastomer used in the present disclosure is not limited, and examples thereof include a peroxide-crosslinkable fluoroelastomer and a polyol-crosslinkable fluoroelastomer. For example, the fluoroelastomer may also be a fluoroelastomer that can be crosslinked using pyridinium-type salts as disclosed in Japanese Translation of PCT International Application Publication No. 2018-514627.

The polyol-crosslinkable fluoroelastomer is a fluoroelastomer having a polyol-crosslinkable site. The polyol-crosslinkable fluoroelastomer is preferably a polyol-crosslinkable partially fluorinated elastomer. The polyol-crosslinkable fluoroelastomer is not limited and examples thereof include vinylidene fluoride (VdF)-based fluoroelastomers.

Of these, the fluoroelastomer is preferably a peroxide-crosslinkable fluoroelastomer. The peroxide-crosslinkable fluoroelastomer is not limited, and may be a fluoroelastomer having a peroxide-crosslinkable site. The peroxide-crosslinkable site is not limited, and examples thereof include the iodine atoms, bromine atoms, and CN groups of the fluoroelastomer; and the unsaturated carbon-carbon bonds present on the main or side chains of the fluoroelastomer.

The fluoroelastomer may be a partially fluorinated elastomer or a perfluoroelastomer. Of these, the fluoroelastomer is preferably a partially fluorinated elastomer, and more preferably a peroxide-crosslinkable partially fluorinated elastomer. The monomer compositions of the fluoroelastomers will be described in detail below, but they are suitable as monomer compositions of peroxide-crosslinkable and polyol-crosslinkable fluoroelastomers, and particularly suitable as monomer compositions of peroxide-crosslinkable fluoroelastomers.

It is preferable that the partially fluorinated elastomer contains a monomer unit derived from at least one monomer selected from the group consisting of, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) represented by the general formula: $CF_2=CF-Rf^a$, wherein $Rf^a$ is $-CF_3$ or $-ORf^b$ (where $Rf^b$ is a perfluoroalkyl group having 1 to 5 carbon atoms). Of these, the partially fluorinated elastomer preferably contains VdF units or TFE units.

Examples of the partially fluorinated elastomer include vinylidene fluoride (VdF)-based fluoroelastomers, tetrafluoroethylene (TFE)/propylene (Pr)-based fluoroelastomers, tetrafluoroethylene (TFE)/propylene/vinylidene fluoride (VdF)-based fluoroelastomers, ethylene/hexafluoropropylene (HFP)-based fluoroelastomers, ethylene/hexafluoropropylene (HFP)/vinylidene fluoride (VdF)-based fluoroelastomers, and ethylene/hexafluoropropylene (HFP)/tetrafluoroethylene (TFE)-based fluoroelastomers. Of these, the partially fluorinated elastomer is preferably at least one selected from the group consisting of vinylidene fluoride-based fluoroelastomers and tetrafluoroethylene/propylene-based fluoroelastomers.

Of these, the fluoroelastomer is preferably at least one selected from the group consisting of vinylidene fluoride-based fluoroelastomers, tetrafluoroethylene/propylene-based fluoroelastomers, and perfluoro fluoroelastomers.

The vinylidene fluoride-based fluoroelastomer is preferably a copolymer consisting of 45 to 85 mol% vinylidene fluoride and 55 to 15 mol% of at least one further monomer copolymerizable with vinylidene fluoride, and more preferably a copolymer consisting of 50 to 80 mol% vinylidene fluoride and 50 to 20 mol% of at least one further monomer copolymerizable with vinylidene fluoride.

Examples of the at least one further monomer copolymerizable with vinylidene fluoride include monomers such as tetrafluoroethylene (TFE), hexafluoropropylene (HFP), fluoroalkyl vinyl ethers, chlorotrifluoroethylene (CTFE), trifluoroethylene, trifluoropropylene, pentafluoropropylene, trifluorobutene, tetrafluoroisobutene, hexafluoroisobutene, vinyl fluoride, a fluoromonomer represented by the general formula (100): $CHX^{101}=CX^{102}Rf^{101}$ (wherein one of $X^{101}$ and $X^{102}$ is H and the other is F, and $Rf^{101}$ is a linear or branched fluoroalkyl group having 1 to 12 carbon atoms), a fluoromonomer represented by the general formula (170) : $CH_2=CH-(CF_2)_n-X^{171}$ (wherein $X^{171}$ is H or F, and n is an integer of 3 to 10), and a monomer that provides a crosslinking site; and non-fluorinated monomers such as ethylene, propylene, and alkyl vinyl ethers. These may be used alone or in any combination thereof.

Specific examples of the vinylidene fluoride-based fluoroelastomers include VdF/HFP-based rubber, VdF/HFP/TFE-based rubber, VdF/CTFE-based rubber, VdF/CTFE/TFE-based rubber, rubber based on VDF and a fluoromonomer represented by the general formula (100), rubber based on VDF, a fluoromonomer represented by the general formula (100), and TFE, rubber based on VDF and perfluoro(methyl vinyl ether) (PMVE), VDF/PMVE/TFE-based rubber, and VDF/PMVE/TFE/HFP-based rubber.

The tetrafluoroethylene/propylene-based fluoroelastomer is preferably a copolymer containing 45 to 70 mol% of tetrafluoroethylene, 55 to 30 mol% of propylene, and 0 to 5 mol% of a fluoromonomer that provides a crosslinking site.

The perfluoroelastomer is preferably at least one selected from the group consisting of perfluoroelastomers containing TFE, such as a copolymer containing TFE and a fluoromonomer represented by the general formula (11), (12), or (13) and a copolymer containing TFE, a fluoromonomer represented by the general formula (11), (12), or (13), and a monomer that provides a crosslinking site.

A fluoromonomer represented by the general formula (11): $CF_2=CF-ORf^{111}$
wherein $Rf^{111}$ represents a perfluoroalkyl group having 1 to 10 carbon atoms, is preferred. $Rf^{111}$ is preferably a perfluoroalkyl group having 1 to 5 carbon atoms.

A fluoromonomer represented by the general formula (12): $CF_2=CFOCF_2ORf^{121}$
wherein $Rf^{121}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms

A fluoromonomer represented by the general formula (13) : $CF_2=CFO(CF_2CF(Y^{131})O)_m(CF_2)_nF$
wherein $Y^{131}$ represents a fluorine atom or a trifluoromethyl group; m is an integer of 1 to 4; and n is an integer of 1 to 4

The fluoromonomer represented by the general formula (11) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).

The fluoromonomer represented by the general formula (12) is preferably at least one selected from the group consisting of $CF_2=CFOCF_2OCF_3$, $CF_2=CFOCF_2OCF_2CF_3$, and $CF_2=CFOCF_2OCF_2CF_2OCF_3$.

The fluoromonomer represented by the general formula (13) is preferably at least one selected from the group consisting of $CF_2=CFOCF_2CF(CF_3)O(CF_2)_3F$, $CF_2=CFO(CF_2CF(CF_3)O)_2(CF_2)_3F$, and $CF_2=CFO(CF_2CF(CF_3)O)_2(CF_2)_2F$.

The composition of the TFE/PMVE copolymer is preferably 45 to 90/10 to 55 (mol%), more preferably 55 to 80/20 to 45, and further preferably 55 to 70/30 to 45.

The composition of the copolymer of TFE/PMVE/monomer that provides a crosslinking site is preferably 45 to 89.9/10 to 54.9/0.01 to 4 (mol%), more preferably 55 to 77.9/20 to 49.9/0.1 to 3.5, and further preferably 55 to 69.8/30 to 44.8/0.2 to 3.

The composition of the copolymer of TFE and a fluoromonomer represented by the general formula (11), (12), or (13) having 4 to 12 carbon atoms is preferably 50 to 90/10 to 50 (mol%), more preferably 60 to 88/12 to 40, and still more preferably 65 to 85/15 to 35.

The composition of the copolymer of TFE, a fluoromonomer represented by the general formula (11), (12), or (13) having 4 to 12 carbon atoms, and a monomer that provides a crosslinking site is preferably 50 to 89.9/10 to 49.9/0.01 to 4 (mol%), more preferably 60 to 87.9/12 to 39.9/0.1 to 3.5, and still more preferably 65 to 84.8/15 to 34.8/0.2 to 3.

When these copolymers have compositional features outside these ranges, the properties as a rubber elastic body are lost, and the properties tend to be close to those of a resin.

The perfluoroelastomer is preferably at least one selected from the group consisting of copolymers of TFE, a fluoromonomer represented by the general formula (13), and a fluoromonomer that provides a crosslinking site, copolymers of TFE and a perfluorovinyl ether represented by the general formula (13), copolymers of TFE and a fluoromonomer represented by the general formula (11), and copolymers of TFE, a fluoromonomer represented by the general formula (11), and a monomer that provides a crosslinking site.

Examples of the perfluoroelastomer further include the perfluoroelastomers disclosed in documents such as International Publication No. WO97/24381, Japanese Patent Publication No. 61-57324, Japanese Patent Publication No. 04-8118, and Japanese Patent Publication No. 05-13961.

As it further improves the resistance of the member to ammonia and urea, the fluoroelastomer is particularly preferably at least one selected from the group consisting of a fluoroelastomer (1) containing a vinylidene fluoride unit and a fluorine-containing monomer (1) unit represented by the following general formula (1):

$$CHX^1=CX^2Rf \qquad (1)$$

wherein one of $X^1$ and $X^2$ is H and the other is F, and Rf is a linear or branched fluoroalkyl group having 1 to 12 carbon atoms; and a tetrafluoroethylene/propylene-based fluoroelastomer.

The Rf in the above general formula (1) is preferably a linear fluoroalkyl group, and more preferably a linear perfluoroalkyl group. Rf preferably has 1 to 6 carbon atoms.

In the general formula (1), it is preferable that $X^1$ be H and $X^2$ be F.

Examples of the fluorine-containing monomer (1) include $CH_2=CFCF_3$, $CH_2=CFCF_2CF_3$, $CH_2=CFCF_2CF_2CF_3$, $CH_2=CFCF_2CF_2CF_3$, and $CHF=CHCF_3$ (1,3,3,3-tetrafluoropropene), and in particular $CH_2=CFCF_3$ (2,3,3,3-tetrafluoropropene) is preferable. One or more monomers may be used as the fluorine-containing monomer (1).

The fluoroelastomer (1) may further contain further monomer units other than vinylidene fluoride units and fluorine-containing monomer (1) units. The further monomer is not limited as long as it is copolymerizable with vinylidene fluoride and the fluorine-containing monomer (1), and one or more monomers may be used.

The further monomer is preferably at least one selected from the group consisting of tetrafluoroethylene [TFE], hexafluoropropylene [HFP], perfluoro(methylvinylether), perfluoro(ethylvinylether), perfluoro(propylvinylether), chlorotrifluoroethylene, trifluoroethylene, hexafluoroisobutene, vinyl fluoride, ethylene, propylene, alkyl vinyl ether, and monomers that provide a crosslinking site, more preferably at least one selected from the group consisting of TFE, hexafluoropropylene, perfluoro(methylvinylether), perfluoro(ethylvinylether), perfluoro(propylvinylether), chlorotrifluoroethylene, trifluoroethylene, hexafluoroisobutene, vinyl fluoride, ethylene, alkyl vinyl ether, and monomers that provide a crosslinking site, and still more preferably TFE. In a preferred embodiment, only TFE is used as the further monomer.

Examples of the above monomer that provides a crosslinking site include iodine- or bromine-containing monomers represented by

General formula (2) : $\qquad CX^3_2=CX^3\text{-}Rf^1CHR^1X^4$

wherein $X^3$ is the same or different and is H, F, or $\text{-CH}_3$; $Rf^1$ is a fluoroalkylene group, a perfluoroalkylene group, a fluoro(poly)oxyalkylene group or a perfluoro(poly)oxyalkylene group; $R^1$ is H or $\text{-CH}_3$; and $X^4$ is I or Br, iodine- or bromine-containing monomers represented by

General formula (3) : $\qquad CX^5_2=CX^5\text{-}Rf^2X^6$

wherein $X^5$ is the same or different and is H, F, or $\text{-CH}_3$; $Rf^2$ is a fluoroalkylene group, a perfluoroalkylene group, a fluoro(poly)oxyalkylene group or a perfluoro(poly)oxyalkylene group; and $X^6$ is I or Br (preferably, iodine-containing monomers represented by the general formula: $CH_2=CH(CF_2)_nI$ (n is an integer of 2 to 8), monomers represented by

General formula (4): $\qquad CF_2=CFO(CF_2CF(CF_3)O)_m(CF_2)_n\text{-}X^7$

wherein m is an integer of 0 to 5, and n is an integer of 1 to 3; and $X^7$ is a cyano group, a carboxyl group, an alkoxycarbonyl group, I, or Br,

monomers represented by

General formula (5): $CH_2=CFCF_2O(CF(CF_3)CF_2O)_m(CF(CF_3))_n-X^8$

wherein m is an integer of 0 to 5, and n is an integer of 1 to 3; and $X^8$ is a cyano group, a carboxyl group, an alkoxycarbonyl group, I, Br, or $-CH_2OH$, and
monomers represented by

General formula (6) : $CR^2R^3=CR^4-Z-CR^5=CR^6R^7$

wherein $R^2$ to $R^7$ are the same or different and are H or an alkyl group having 1 to 5 carbon atoms; and Z is a linear or branched alkylene group having 1 to 18 carbon atoms and optionally having an oxygen atom, a cycloalkylene group having 3 to 18 carbon atoms, an at least partially fluorinated alkylene or oxyalkylene group having 1 to 10 carbon atoms, or a (per)fluoropolyoxyalkylene group represented by

$- (Q)_p-CF_2O-(CF_2CF_2O)_m(CF_2O)_n-CF_2-(Q)_p-$

wherein Q is an alkylene or oxyalkylene group; P is 0 or 1; and m/n is 0.2 to 5) and having a molecular weight of 500 to 10,000.

Examples of the monomers represented by the general formula (6) include $CH_2=CH-(CF_2)_2-CH=CH_2$, $CH_2=CH-(CF_2)_4-CH=CH_2$, $CH_2=CH-(CF_2)_6-CH=CH_2$, and monomers represented by the general formula: $CH_2=CH-Z^1-CH=CH_2$ (wherein $Z^1$ is a fluoropolyoxyalkylene group represented by $-CH_2OCH_2-CF_2O-(CF_2CF_2O)_{m1}(CF_2O)_{n1}-CF_2-CH_2OCH_2-$, m1/n1 is 0.5, and the molecular weight is 2,000).

Of these, the monomer that provides a crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF_2CH_2I$, $CF_2=CFOCF_2CF(CF_3)OCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, and $CH_2=CFCF_2OCF(CF_3)CF_2OCF(CF_3)CH_2OH$.

The monomer that provides a crosslinking site is particularly preferably $CF_2=CFOCF_2CF_2CH_2I$, as it allows to improve the crosslink density in crosslinks using peroxide.

The molar ratio of vinylidene fluoride units/fluorine-containing monomer (1) units in the fluoroelastomer (1) is preferably 87/13 to 20/80, the lower limit of the molar ratio of vinylidene fluoride units is more preferably 22/78 or more, still more preferably 50/50 or more, particularly preferably 60/40 or more, and the upper limit of the molar ratio of vinylidene fluoride units is more preferably 78/22 or less. The content of further monomer units is preferably 0 to 50 mol% and more preferably 1 to 40 mol% of all monomer units.

The fluoroelastomer (1) is preferably a copolymer consisting only of vinylidene fluoride units, fluorine-containing monomer (1) units, and further monomer units.

The fluoroelastomer (1) has preferably at least one of an iodine atom and a bromine atom, and more preferably an iodine atom. As it further improves the permanent compression set properties of the member, the total content of iodine and bromine atoms of the fluoroelastomer (1) is preferably 0.001 to 10 mass%, the upper limit of the total content of iodine and bromine atoms is more preferably 5.0 mass% or less, still more preferably 1.0 mass% or less, particularly preferably 0.7 mass% or less, and most preferably 0.5 mass% or less, and the lower limit of the total content of iodine and bromine atoms is more preferably 0.01 mass% or more, still more preferably 0.05 mass% or more, particularly preferably 0.08 mass% or more, and most preferably 0.1 mass% or more. The binding positions of the iodine and bromine atoms in the fluoroelastomer (1) may be at the end of the main chain of the fluoroelastomer (1), at the end of the side chain, or of course at both. In such fluoroelastomers, the iodine or bromine end serves as a crosslinking point (crosslinking site), which allows to obtain a crosslinked product with a high crosslink density and to perform peroxide crosslinking more easily.

The fluoroelastomer (1) is preferably at least one selected from the group consisting of a copolymer (I) containing only vinylidene fluoride units and fluorine-containing monomer (1) units, wherein the molar ratio of vinylidene fluoride units/fluorine-containing monomer (1) units is 87/13 to 22/78; a copolymer (II) containing only vinylidene fluoride units, fluorine-containing monomer (1) units, and further monomer units copolymerizable with vinylidene fluoride and the fluorine-containing monomer (1), wherein the molar ratio of vinylidene fluoride units/fluorine-containing monomer (1) units is 85/15 to 20/80, and the further monomer units are 1 to 50 mol% of all monomer units; and a copolymer (III) containing vinylidene fluoride units, fluorine-containing monomer (1) units, and further monomer units copolymerizable with vinylidene fluoride and the fluorine-containing monomer (1), wherein the molar ratio of vinylidene fluoride units/fluorine-containing monomer (1) units is 85/15 to 20/80, and the further monomer units are 0 to 50 mol% of all monomer units, and having at least one of an iodine atom and a bromine atom, wherein the total content of iodine and bromine atoms is 0.001 to 10 mass%.

The copolymer (I) contains only vinylidene fluoride units and fluorine-containing monomer (1) units, where the molar ratio of vinylidene fluoride units/fluorine-containing monomer (1) units is 87/13 to 22/78. The molar ratio of vinylidene fluoride units/fluorine-containing monomer (1) units in the copolymer (I) is preferably 82/18 to 60/40.

The copolymer (II) contains only vinylidene fluoride units, fluorine-containing monomer (1) units, and further monomer units copolymerizable with vinylidene fluoride and the fluorine-containing monomer (1), where the molar ratio of vinylidene fluoride units/fluorine-containing monomer (1) units is 85/15 to 20/80, and the further monomer units are 1 to 50 mol% of all monomer units.

The molar ratio of vinylidene fluoride units/fluorine-containing monomer (1) units in the copolymer (II) is preferably 85/15 to 50/50, and more preferably 85/15 to 60/40.

The content of the further monomer units in the copolymer (II) is preferably 1 to 40 mol% of all monomer units. The further monomers described above are suitable as further monomers to be contained in the copolymer (II).

The copolymer (III) contains vinylidene fluoride units, fluorine-containing monomer (1) units, and further monomer units copolymerizable with vinylidene fluoride and the fluorine-containing monomer (1), where the molar ratio of vinylidene fluoride units/fluorine-containing monomer (1) units is 85/15 to 20/80, and the further monomer units are 0 to 50 mol% of all monomer units, and has at least one of an iodine atom and a bromine atom, where the total content of iodine and bromine atoms is 0.001 to 10 mass%.

The copolymer (III) is preferably a copolymer containing substantially only vinylidene fluoride units and fluorine-containing monomer (1) units, or a copolymer containing substantially only vinylidene fluoride units, fluorine-containing monomer (1) units, and further monomer units copolymerizable with vinylidene fluoride and the fluorine-containing monomer (1). In this case, the copolymer (III) may be produced using a reactive emulsifier to the extent that the effects of the present disclosure are not impaired. I-ends and the like derived from chain transfer agents may also be contained.

The copolymer (III) more preferably contains substantially only vinylidene fluoride units and fluorine-containing monomer (1) units, where the molar ratio of vinylidene fluoride units/fluorine-containing monomer (1) units is 80/20 to 20/80.

The copolymer (III) also more preferably contains substantially only vinylidene fluoride units, fluorine-containing monomer (1) units, and further monomer units copolymerizable with vinylidene fluoride and the fluorine-containing monomer (1), where the molar ratio of vinylidene fluoride units/fluorine-containing monomer (1) units is 85/15 to 50/50, and the further monomer units are 1 to 50 mol% of all monomer units.

In the present disclosure, the content of each monomer unit is the value measured by an NMR method.

The copolymer (III) has at least one of an iodine atom and a bromine atom, where the total content of iodine and bromine atoms is 0.001 to 10 mass%. The upper limit of the total content of iodine and bromine atoms is more preferably 5.0 mass% or less, still more preferably 1.0 mass% or less, particularly preferably 0.7 mass% or less, and most preferably 0.5 mass% or less, and the lower limit of the total content of iodine and bromine atoms is more preferably 0.01 mass% or more, still more preferably 0.05 mass% or more, particularly preferably 0.08 mass% or more, and most preferably 0.1 mass% or more.

The iodine content can be measured by the following method. An absorbing solution is prepared by mixing $Na_2CO_3$ and $K_2CO_3$ at a 1:1 ratio (weight ratio), and dissolving the resulting mixture in 20 ml of pure water. 12 mg of a sample (fluorine-containing polymer) is mixed with 5 mg of $Na_2SO_3$ to prepare a mixture, which is combusted in oxygen in a quartz flask, and the combustion gas generated is introduced into the absorbing solution. The resulting absorbing solution is allowed to stand for 30 minutes, and then the concentration of iodine ions in the absorbing solution is measured using a Shimadzu 20A ion chromatograph. The content of iodine ions can then be determined from the measured values using a calibration curve prepared using KI standard solutions containing 0.5 ppm and 1.0 ppm of iodine ions.

The binding positions of the iodine and bromine atoms in the copolymer (III) may be at the end of the main chain of the copolymer (III), at the end of the side chain, or of course at both. In such a copolymer, the iodine or bromine end serves as a crosslinking point (crosslinking site), which allows to obtain a crosslinked product with a high crosslink density and to perform peroxide crosslinking more easily.

The copolymer (III) can be produced by a production method using an iodine- or bromine-containing monomer as a monomer that provides a crosslinking site, a production method using a bromine or iodine compound as a polymerization initiator or chain transfer agent, and the like.

In the copolymer (III), the further monomer is not limited as long as it is copolymerizable with vinylidene fluoride and the fluorine-containing monomer (1), and one or more monomers may be used.

The content of further monomer units in the copolymer (III) is preferably 0 to 50 mol% of all monomer units, and more preferably 1 to 50 mol% of all monomer units.

In the copolymer (III), examples of monomers that provide a crosslinking site include monomers represented by the general formulae (2) to (6) described above.

In the copolymer (III), the monomer that provides a crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$,

$CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, and $CH_2=CH(CF_2)_2CH=CH_2$.

In the copolymer (III), the monomer that provides a crosslinking site is particularly preferably $CF_2=CFOCF_2CF_2CH_2I$, as it allows to improve the crosslink density in crosslinks using peroxide.

In the copolymer (III), the monomer that provides a crosslinking site is preferably 0.01 to 10 mol%, more preferably 0.01 to 2 mol% of all monomer units.

The fluoroelastomer (1) is still more preferably the copolymer (III).

The glass transition temperature of the fluoroelastomer (1) may be 25°C or lower, preferably 0°C or lower, more preferably -5°C or lower, and still more preferably -10°C or lower. The glass transition temperature may even be -20°C or lower.

The glass transition temperature is determined by cooling 10 mg of a sample to -75°C then heating it at 20°C/min using a differential scanning calorimeter (manufactured by Hitachi High-Tech Corporation, X-DSC7000) to obtain a DSC curve, and then using as the glass transition temperature, the temperature indicating an intersection point of an extension of a baseline around the second-order transition of the DSC curve with a tangent of the DSC curve at the inflection point.

The fluoroelastomer (1) preferably has a number average molecular weight (Mn) of 7,000 to 500,000, a weight average molecular weight (Mw) of 10,000 to 1,000,000, and a Mw/Mn of 1.3 to 8.0, due to its excellent sealability. The number average molecular weight (Mn), weight average molecular weight (Mw), and Mw/Mn are values measured by GPC.

The Mooney viscosity (ML 1+10(100°C)) at 100°C of the fluoroelastomer (1) is preferably 2 or higher, more preferably 5 or higher, and still more preferably 10 or higher as it allows to obtain good forming conditions; and is preferably 200 or lower, more preferably 120 or lower, still more preferably 100 or lower, and particularly preferably 80 or lower. The Mooney viscosity is a value measured according to ASTM D1646-15 and JIS K6300-1:2013.

The fluoroelastomer (1) can be produced by a general radical polymerization method. The polymerization may be in the form of any of bulk polymerization, solution polymerization, suspension polymerization, or emulsion polymerization, but is preferably in the form of emulsion polymerization as it is easier to implement industrially.

In the above polymerization, a polymerization initiator, a chain transfer agent, a surfactant and a solvent may be used, which are conventionally known.

Examples of the chain transfer agent include esters such as dimethyl malonate, diethyl malonate, methyl acetate, ethyl acetate, butyl acetate, and dimethyl succinate, as well as isopentane, methane, ethane, propane, 2-propanol, acetone, various mercaptans, carbon tetrachloride, and cyclohexane.

The chain transfer agent to be used may be a bromine compound or an iodine compound. Examples of a polymerization method performed using a bromine compound or an iodine compound include a method in which emulsion polymerization is carried out in an aqueous medium under pressure in the presence of the bromine compound or the iodine compound in a substantially oxygen-free state (iodine transfer polymerization method). Representative examples of the bromine compound or iodine compound used include a compound represented by

$$\text{General formula:} \qquad R^8I_xBr_y$$

wherein x and y are each independently an integer of 0 to 2 and satisfy $1 \leq x+y \leq 2$, and $R^8$ is a saturated or unsaturated fluorohydrocarbon group or chlorofluorohydrocarbon group having 1 to 16 carbon atoms, or a hydrocarbon group having 1 to 3 carbon atoms, and may contain an oxygen atom. By using a bromine compound or an iodine compound, an iodine atom or a bromine atom is introduced into the polymer to function as a cross-linking point.

Examples of the bromine compound and the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be mutually combined and used.

Of these, 1,4-diiodoperfluorobutane, 1,6-diiodoperfluorohexane, and 2-iodoperfluoropropane are preferably used from the viewpoints of polymerization reactivity, crosslinkability, availability, and the like.

In the polymerization for producing the fluoroelastomer (1), particularly the copolymer (III), a bromine or iodine compound is preferably used as a chain transfer agent.

One or more fluoroelastomers (1) may be used. In particular, a combination of two copolymers with different molecular structures may be used.

Examples of the combined use of two copolymers with different molecular structures include use of two copolymers (I) with different molecular structures, use of two copolymers (II) with different molecular structures, use of two copolymers (III) with different molecular structures, a combined use of one copolymer (I) and one copolymer (II), a combined use of one copolymer (I) and one copolymer (III), and a combined use of one copolymer (II) and one copolymer (III).

The crosslinkable composition of the present disclosure contains a cross-linking agent. Example of the cross-linking agent include cross-linking agents commonly used in polyol and peroxide cross-linking. The cross-linking agent is preferably at least one selected from the group consisting of polyhydroxy compounds and peroxide, and more preferably peroxide. If emphasis is placed on the resistance of the member to nitric acid, a peroxide cross-linking is suitable. However, if forming a laminate or composite part by vulcanizing and bonding a crosslinked fluoroelastomer to other materials, and sufficient vulcanization and bonding is difficult to achieve with peroxide cross-linking, it may be required to achieve both nitric acid resistance and adhesion by selecting polyol cross-linking.

When the crosslinkable composition of the present disclosure contains a polyol-crosslinkable fluoroelastomer, it preferably contains a polyhydroxy compound as a cross-linking agent. When the crosslinkable composition of the present disclosure contains a peroxide-crosslinkable fluoroelastomer, it preferably contains a peroxide as a cross-linking agent. When using a fluoroelastomer that can be crosslinked using pyridinium-type salts as disclosed in Japanese Translation of PCT International Application Publication No. 2018-514627, pyridinium salts can be used as a cross-linking agent.

The crosslinkable composition of the present disclosure may also contain a crosslinking accelerator, a basic compound, a co-cross-linking agent, and the like.

A suitable polyhydroxy compound may be a polyhydroxy aromatic compound in terms of excellent heat resistance. Examples of the polyhydroxy aromatic compound include, but are not limited to, 2,2-bis(4-hydroxyphenyl)propane (hereinafter referred to as bisphenol A), 2,2-bis(4-hydroxyphenyl)perfluoropropane (hereinafter referred to as bisphenol AF), resorcin, 1,3-dihydroxybenzene, 1,7-dihydroxynaphthalene, 2,7-dihydroxynaphthalene, 2,6-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenyl sulfone, 4,4'-dihydroxydiphenylketone, tri(4-hydroxyphenyl)methane, 3,3',5,5'-tetrachlorobisphenol A, 3,3',5,5'-tetrabromobisphenol A, 2,6-dihydroxy-9H-fluoren-9-one, 3,6-dihydroxy-9H-fluoren-9-one, 2,7-dihydroxy-9H-fluoren-9-one, spiro[fluorene-9,9'-xanthene]-3',6'-diol, fluorescein (CAS No. 2321-07-5), 9,9-bis(4-hydroxyphenyl)fluorene, 2,2'-biphenol, 2,3'-biphenol, 2,4'-biphenol, 3,3'-biphenol, 3,4'-biphenol, 2,6-dihydroxyanthraquinone, 2,7-dihydroxyanthraquinone, 1,1,1-trifluoro-2,2,2-tris(4-hydroxyphenyl)ethane, 4,4',4"-trihydroxytriphenylmethane, 1,1,1-tris(4-hydroxyphenyl)ethane, 3,6-dihydroxy-9H-xanthen-9-one, 4-fluororesorcinol, 5-fluororesorcinol, 4-chlororesorcinol, 4',7-dihydroxyisoflavone, 2,2,3,3,4,4,5,5-octafluoro-1,6-hexanediol, and 6-hydroxy-3-coumaranone.

The content of polyhydroxy compound is preferably 0.05 to 10 parts by mass and more preferably 0.5 to 5 parts by mass based on 100 parts by mass of the fluoroelastomer.

A cross-linking agent such as a polyhydroxy compound may be used by mixing with other compounds. Examples of the mixture containing a cross-linking agent include a solid solution of a cross-linking agent and a crosslinking accelerator, and a mixture of a cross-linking agent and a compound capable of dissolving the cross-linking agent. The solid solution is preferably a solid solution of a crosslinking agent and a quaternary phosphonium salt. The quaternary phosphonium salt is preferably benzyltriphenylphosphonium chloride.

When the cross-linking agent is a polyhydroxy compound, the crosslinkable composition of the present disclosure preferably contains a crosslinking accelerator. The crosslinking accelerator promotes formation of an intramolecular double bond in the dehydrofluorination reaction of the polymer main chain and addition of a polyhydroxy compound to the formed double bond.

Examples of the crosslinking accelerator include onium compounds, and among onium compounds, the crosslinking accelerator is preferably at least one selected from the group consisting of ammonium compounds such as a quaternary ammonium salt, phosphonium compounds such as a quaternary phosphonium salt, oxonium compounds, sulfonium compounds, cyclic amines, and monofunctional amine compounds, and more preferably at least one selected from the group consisting of quaternary ammonium salts and quaternary phosphonium salts.

Examples of the quaternary ammonium salt include, but are not limited to, 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methyl sulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5,4,0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter referred to as DBU-B), 8-benzyl-1,8-diazabicyclo[5.4.0]-7-undecenium hydroxide, 8-phenethyl-1,8-diazabicyclo[5.4.0]-7-undecenium chloride, and 8-(3-phenylpropyl)-1,8-diazabicyclo[5.4.0]-7-undecenium chloride. Of these, DBU-B is preferred in terms of excellent crosslinkability and various properties.

Examples of the quaternary phosphonium salt include, but are not limited to, tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride, and among these, benzyltriphenylphosphonium chloride (BTPPC) is preferable in terms of excellent crosslinkability and various properties.

When the cross-linking agent is a polyhydroxy compound, a vulcanization accelerator for fluoroelastomers containing bisphenol AF as a cross-linking agent, as disclosed in Japanese Patent Laid-Open No. 11-147891, or the adduct of a polyhydroxy compound with a quaternary phosphonium salt containing a polyhydroxy compound as a cross-linking agent, as described in Japanese Patent Laid-Open No. 2010-150563, can also be used. When these compounds (mixtures) are used as cross-linking agents and crosslinking accelerators, the content (parts by mass) of the above cross-linking agent is the value obtained by subtracting the content of the crosslinking accelerator in the compound from the content of the compound per 100 parts by mass of the fluoroelastomer.

The content of crosslinking accelerator is not limited and is preferably 0.05 to 5 parts by mass and more preferably 0.5 to 1 part by mass based on 100 parts by mass of the fluoroelastomer.

When a vulcanization accelerator for fluoroelastomers as disclosed in Japanese Patent Laid-Open No. 11-147891, or the adduct of a polyhydroxy compound with a quaternary phosphonium salt as described in Japanese Patent Laid-Open No. 2010-150563, is used as a cross-linking agent and crosslinking accelerator, the content of the above cross-linking agent is the value obtained by subtracting the content of the cross-linking agent in the compound from the content of these compounds per 100 parts by mass of the fluoroelastomer.

Examples of the pyridinium salt include the pyridinium salts described in Japanese Translation of PCT International Application Publication No. 2018-514627. As a suitable content of pyridinium salts, the content described in Japanese Translation of PCT International Application Publication No. 2018-514627 can also be applied to the crosslinkable composition of the present disclosure.

When the cross-linking agent is a pyridinium salt, the crosslinkable composition of the present disclosure preferably contains a basic compound. Examples of the basic compound include the basic compounds described in Japanese Translation of PCT International Application Publication No. 2018-514627. As a suitable content of basic compound, the content described in Japanese Translation of PCT International Application Publication No. 2018-514627 can also be applied to the crosslinkable composition of the present disclosure.

The peroxide is not limited as long as it is a cross-linking agent normally used for peroxide cross-linking, and in general, those that readily produce peroxy radicals in the presence of heat and a redox system are suitable. Specific examples include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, $\alpha,\alpha$'-bis(t-butylperoxy)-p-diisopropylbenzene, 2,5-dimethyl-2,5-bis(t-butylperoxy)hexane, 2,5-dimethyl-2,5-bis(t-butylperoxy)-hexyne-3, benzoyl peroxide, t-butyl peroxybenzene, 2,5-dimethyl-2,5-di(benzoylperoxy)hexane, t-butyl peroxymaleate, t-butyl peroxyisopropyl carbonate, and t-butyl peroxybenzoate. Of these, 2,5-dimethyl-2,5-bis(t-butylperoxy)hexane and 2,5-dimethyl-2,5-bis(t-butylperoxy)-hexyne-3 are preferred.

The content of peroxide is preferably 0.05 to 10 parts by mass and more preferably 1.0 to 5 parts by mass based on 100 parts by mass of the fluoroelastomer.

When the cross-linking agent is a peroxide, the crosslinkable composition of the present disclosure preferably contains a co-cross-linking agent. Examples of the co-cross-linking agent include triallyl cyanurate, trimethallyl isocyanurate, triallyl isocyanurate (TAIC), triacrylformal, triallyl trimellitate, N,N'-m-phenylene bismaleimide, dipropagil terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene)cyanurate, and triallyl phosphite. Of these, triallyl isocyanurate (TAIC) is preferred. When kneading the fluoroelastomer with a co-cross-linking agent, a co-cross-linking agent impregnated with an inert inorganic powder or the like may be used.

The content of co-cross-linking agent is preferably 0.1 to 10 parts by mass and more preferably 0.5 to 5 parts by mass based on 100 parts by mass of the fluoroelastomer.

The crosslinkable composition of the present disclosure may contain a variety of additives, such as usual additives to be compounded in a fluoroelastomer crosslinkable composition as required, such as fillers (carbon black, bituminous coal, barium sulfate, diatomaceous earth, calcined clay, talc and the like), processing aids (wax and the like), plasticizers, colorants, stabilizers, tackifiers (cumarone resins, cumarone indene resins and the like), mold release agents, electroconductivity imparting agents, thermal conductivity imparting agents, surface non-adhesive agents, softness imparting agents, heat resistance improvers, flame retarders, foaming agents, and antioxidants as described in International Publication No. WO 2012/023485, and may contain one or more common cross-linking agents, crosslinking accelerators different from those described above.

Examples of fillers include metal oxides such as titanium oxide and aluminum oxide; metal hydroxides such as magnesium hydroxide and aluminum hydroxide; carbonates such as magnesium carbonate, aluminum carbonate, calcium carbonate, and barium carbonate; silicates such as magnesium silicate, calcium silicate, and aluminum silicate; sulfates such as aluminum sulfate, calcium sulfate, and barium sulfate; metal sulfides such as molybdenum disulfide, iron sulfide, and copper sulfide; diatomaceous earth, asbestos, lithopone (zinc sulfide/barium sulfide), graphite, fluorocarbon, calcium fluoride, coke, quartz fine powder, talc, mica powder, wollastonite, carbon fiber, aramid fiber, various whiskers, glass fiber, organic reinforcing agents, organic fillers, polytetrafluoroethylene, fluorine-containing thermoplastic resin, mica, silica, cerite, and clay.

The content of the filler such as carbon black is not limited, and is preferably 0 to 300 parts by mass, more preferably 1 to 150 parts by mass, even more preferably 2 to 100 parts by mass, and particularly preferably 2 to 75 parts by mass based on 100 parts by mass of the fluoroelastomer.

The content of the processing aid such as wax is preferably 0 to 10 parts by mass and more preferably 0 to 5 parts by mass based on 100 parts by mass of the fluoroelastomer. When a processing aid, a plasticizer, and a mold release agent are used, the mechanical properties and the sealability of the resulting formed article tend to be impaired, and thus the contents thereof need to be adjusted such that the characteristics of the intended formed article to be obtained are acceptable.

The crosslinkable composition of the present disclosure may contain a dialkyl sulfone compound. Examples of the dialkyl sulfone compound include dimethyl sulfone, diethyl sulfone, dibutyl sulfone, methyl ethyl sulfone, diphenyl sulfone, and sulfolane. The content of the dialkyl sulfone compound is preferably 0 to 10 parts by mass, more preferably 0 to 5 parts by mass, and particularly preferably 0 to 3 parts by mass based on 100 parts by mass of the fluoroelastomer. In a case where the crosslinkable composition of the present disclosure contains a dialkylsulfone compound, the lower limit of the content of the dialkylsulfone compound may be, for example, 0.1 parts by mass or more based on 100 parts by mass of the fluoroelastomer.

The crosslinkable composition of the present disclosure is obtained by kneading a fluoroelastomer, hydrotalcite, a cross-linking agent, a co-cross-linking agent, a crosslinking accelerator, a filler, and the like by using a rubber kneading machine generally used. As the rubber kneading machine, there can be used a roll, a kneader, a Banbury mixer, an internal mixer, a twin-screw extruder or the like.

The method for crosslinking the crosslinkable composition of the present disclosure may be a commonly used method such as press crosslinking, steam crosslinking, and oven crosslinking, as well as a crosslinking reaction performed under any conditions, under normal pressure, increased pressure, reduced pressure, and in air. The crosslinking conditions are suitably determined according to the type of a crosslinking agent to be used, heating is usually performed within a temperature range of 150 to 300°C and a range of 1 min to 24 hr. In the case of press and steam crosslinking, it is preferably performed within a temperature range of 150 to 180°C, and the crosslinking time may be at least up to the crosslinking time T90, for example, a range of 1 min to 2 hr. In the case of subsequent (after press or steam crosslinking) oven crosslinking, it is preferably performed within a temperature range of 170°C and 250°C, but not necessarily, and the crosslinking time for oven crosslinking is preferably, for example, 0 to 48 hours.

The member of an air management system for an ammonia combustion engine of the present disclosure contains a crosslinked fluoroelastomer obtained by crosslinking the crosslinkable composition. The member of the present disclosure may be, for example, a hose or a sealing material.

The member of the present disclosure can be suitably used, for example, as a member of the intake/exhaust system of an ammonia combustion engine.

Specific examples of usage in the intake/exhaust system include a packing used for an intake manifold, an exhaust manifold, and the like, and a throttle body packing for a throttle; a diaphragm used for EGR (exhaust gas recirculation), pressing control (BPT), a wastegate, a turbo wastegate, an actuator, an actuator for a variable turbine geometry (VTG) turbo, an exhaust purification valve, and the like; a hose such as an EGR (exhaust gas recirculation) control hose, an emission control hose, a turbo oil hose (supply) and a turbo oil hose (return) of a turbocharger, a turbo air hose, an intercooler hose, a turbocharger hose, a hose connected to a compressor of a turbo engine equipped with an intercooler, an exhaust gas hose, an air intake hose, a turbo hose, and a DPF (diesel particulate filter) sensor hose; an air duct and a turbo air duct; an intake manifold gasket; and a sealing material for EGR, a sealing material used for an afterburn prevention valve seat of an AB valve, a turbine shaft seal (of a turbocharger and the like), and a groove component of a rocker cover and air suction manifold used in automobile engines, and a member of a urea-SCR system.

In addition, in exhaust gas control components, the molded article can be used as a seal used for a steam recovery canister, a catalytic converter, an exhaust gas sensor, an oxygen sensor, and the like, and a seal for a solenoid armature of steam recovery and steam canister; and an intake manifold gasket.

While embodiments have been described above, it will be understood that various changes in form and detail can be made without departing from the gist and scope of the claims.

EXAMPLES

Next, embodiments of the present disclosure will now be described by way of Examples, but the present disclosure is not limited only to the Examples.

Various numerical values in the Examples were measured by the following methods.

<Monomer compositional feature of fluoroelastomer>

Measurements were performed using $^{19}$F-NMR (manufactured by Bruker, AC300P).

<Mooney viscosity>

The Mooney viscosity was measured according to ASTM D1646-15 and JIS K6300-1:2013. The measurement temperature was 100°C.

<Content of iodine>

An absorbing solution was prepared by mixing $Na_2CO_3$ and $K_2CO_3$ at a 1:1 ratio (weight ratio), and dissolving the resulting mixture in 20 ml of pure water. 12 mg of a sample (fluoroelastomer) was mixed with 5 mg of $Na_2SO_3$ to prepare a mixture, which was combusted in oxygen in a quartz flask, and the combustion gas generated was introduced into the absorbing solution. After allowing the resulting absorbing solution to stand for 30 minutes, the concentration of iodine ions in the absorbent solution was measured using a Shimadzu 20A ion chromatograph. The content of iodine ions was determined using a calibration curve prepared using KI standard solutions containing 0.5 ppm and 1.0 ppm of iodine ions.

<Crosslinking characteristics (maximum torque (MH), optimum crosslinking time (T90))>

For a crosslinkable composition, in primary crosslinking, a crosslinking curve under the conditions described in Tables 1 to 3 was determined by using a vulcanization tester (MDR H2030 manufactured by M&K Co., Ltd.) or vulcanization tester (Rubber Process Analyzer RPA2000 manufactured by Alpha Technologies), and the maximum torque (MH) and optimum crosslinking time (T90) were determined from the change in the torque.

<Tensile strength and elongation at break>

A test piece having a dumbbell No. 6 shape was prepared using a crosslinked sheet of 2 mm in thickness. The tensile strength and the elongation at break at 23°C were measured by using the obtained test piece and a tensile tester (manufactured by A&D Co., Ltd., Tensilon RTG-1310) according to JIS K6251:2010 under the condition of 500 mm/min.

<Hardness>

The hardness (peak value, value after 3 seconds) was measured according to JIS K6253-3:2012 using three stacked sheets of cross-linked sheets of 2 mm in thickness and a type A durometer.

<Nitric acid resistance (1)>

A cross-linked sheet of 2 mm in thickness was immersed in a 5 mass% nitric acid solution at 90°C for 72 hours, and then collected. The specific gravity and mass of the cross-linked sheet before and after immersion were measured, and the rate of volume change was calculated according to the following formula. The specific gravity was measured using an automatic specific gravity meter DMA-220H (manufactured by Shinko Denshi Co., Ltd.).

Rate of volume change (%) = {[(mass of cross-linked sheet after immersion)/(specific gravity of cross-linked sheet after immersion)] - [(mass of cross-linked sheet before immersion)/(specific gravity of cross-linked sheet before immersion)]} /[(mass of cross-linked sheet before immersion)/(specific gravity of cross-linked sheet before immersion)] × 100

<Nitric acid resistance (2)>

A cross-linked sheet of 2 mm in thickness was immersed in a 60 mass% nitric acid solution at 80°C for 72 hours, and then collected. The specific gravity and mass of the cross-linked sheet before and after immersion were measured, and the rate of volume change was calculated according to the following formula.

Rate of volume change (%) = {[(mass of cross-linked sheet after immersion)/(specific gravity of cross-linked sheet after immersion)] - [(mass of cross-linked sheet before immersion)/(specific gravity of cross-linked sheet before immersion)]} /[(mass of cross-linked sheet before immersion)/(specific gravity of cross-linked sheet before immersion)] × 100

The following materials were used in Examples and Comparative Examples.

Fluoroelastomer A

Peroxide-crosslinkable fluoroelastomer

$$VdF/TFE/HFP = 50/30/20 \text{ (molar ratio)}$$

Mooney viscosity (ML (1+10) 100°C): 52
Content of iodine: 0.23 mass%

Fluoroelastomer B

Peroxide-crosslinkable fluoroelastomer

$$VdF/2,3,3,3\text{-tetrafluoropropene} = 77/23 \text{ (molar ratio)}$$

Mooney viscosity (ML (1+10) 100°C): 45
Content of iodine: 0.21 mass%

Fluoroelastomer C

Polyol-crosslinkable fluoroelastomer

$$VdF/TFE/HFP = 58/20/22 \text{ (molar ratio)}$$

Mooney viscosity (ML (1+10) 100°C): 42

Fluoroelastomer D

Polyol-crosslinkable fluoroelastomer

$$VdF/HFP = 78/22 \text{ (molar ratio)}$$

Mooney viscosity (ML (1+10) 100°C): 55

Co-cross-linking agent A: Triallyl isocyanurate Peroxide cross-linking agent A: 2,5-Dimethyl-2,5-bis(t-butylperoxy)hexane

Polyol cross-linking agent: bisphenol AF

Crosslinking accelerator: DBU-B
Hydrotalcite: DHT-4A (Kyowa Chemical Industry Co. Ltd.),
$Mg_{4.3}Al_2(OH)_{12.6}CO_3 \cdot mH_2O$

Examples 1 to 8 and Comparative Examples 1 to 4

Respective components were compounded according to the formulation in Tables 1 to 3, and kneaded on an open roll to thereby prepare crosslinkable compositions. The maximum torque (MH) and optimum crosslinking time (T90) of the obtained crosslinkable compositions are shown in Tables 1 to 3. Next, the crosslinkable compositions were crosslinked by primary crosslinking (press crosslinking) under the conditions described in Tables 1 to 3 and secondary crosslinking (oven crosslinking) under the conditions described in Tables 1 to 3 to obtain crosslinked sheet (thickness: 2 mm). The evaluation results of the resulting crosslinked sheets are shown in Tables 1 to 3.

[Table 1]

Table 1

| | | | Example 1 | Example 2 | Comparative Example 1 | Example 3 | Example 4 | Comparative Example 2 |
|---|---|---|---|---|---|---|---|---|
| Formulation | Fluoroelastomer A | part by mass | 100 | 100 | 100 | | | |
| | Fluoroelastomer B | part by mass | | | | 100 | 100 | 100 |
| | MT carbon | part by mass | 20 | 20 | 20 | 20 | 20 | 20 |
| | Co-cross-linking agent A | part by mass | 4 | 4 | 4 | 4 | 4 | 4 |
| | Peroxide cross-linking agent A | part by mass | 1.5 | 1.5 | 1.5 | 1.5 | 1.5 | 1.5 |
| | Hydrotalcite | part by mass | | 3 | | | 3 | |
| | Magnesium oxide | part by mass | | | 3 | | | 3 |
| Crosslinking characteristics (MDR) | Measurement temperature | | 160°C × 10 min | 160°C × 10 min | 160°C × 10 min | - | - | - |
| | Maximum torque (MH) | dNm | 28.0 | 29.8 | 29.0 | - | - | - |
| | Optimum crosslinking time (T90) | min | 3.4 | 3.4 | 3.5 | - | - | - |
| Crosslinking characteristics (RPA2000) | Measurement temperature | | - | - | - | 160°C × 10 min | 160°C × 10 min | 160°C × 10 min |
| | Maximum torque (MH) | dNm | - | - | - | 11.3 | 11.0 | 12.0 |
| | Optimum crosslinking time (T90) | min | - | - | - | 4.6 | 4.8 | 5.0 |

(continued)

| | | | Example 1 | Example 2 | Comparative Example 1 | Example 3 | Example 4 | Comparative Example 2 |
|---|---|---|---|---|---|---|---|---|
| Forming conditions | Primary crosslinking | | 160°C × 10 min | 160°C × 10 min | 160°C × 10 min | 160°C × 10 min | 160°C × 10 min | 160°C × 10 min |
| | Secondary crosslinking | | 180°C × 4 h | 180°C × 4 h | 180°C × 4 h | 180°C × 4 h | 180°C × 4 h | 180°C × 4 h |
| Ordinary-state properties | Tensile strength | MPa | 23.5 | 23.9 | 23.8 | 23.1 | 22.0 | 22.5 |
| | Elongation at break | % | 310 | 300 | 290 | 570 | 510 | 500 |
| | Hardness (peak) | - | 69 | 72 | 72 | 61 | 62 | 63 |
| | Hardness (after 3 s) | - | 67 | 69 | 69 | 56 | 57 | 58 |
| Nitric acid resistance (1) | Rate of volume change | % | 1 | 6 | 11 | 1 | 5 | 13 |

[Table 2]

Table 2

| | | | Example 5 | Comparative Example 3 | Example 6 | Comparative Example 4 |
|---|---|---|---|---|---|---|
| Formulation | Fluoroelastomer C | part by mass | 100 | 100 | | |
| | Fluoroelastomer D | part by mass | | | 100 | 100 |
| | MT carbon | part by mass | | | 20 | 20 |
| | SRF carbon | part by mass | 13 | 13 | | |
| | Polyol cross-linking agent | part by mass | 2 | 2 | 1.5 | 1.5 |
| | Crosslinking accelerator | part by mass | 0.55 | 0.55 | 0.3 | 0.3 |
| | Hydrotalcite | part by mass | 5 | | 3 | |
| | Sodium metasilicate nonahydrate | part by mass | 1 | | 0.5 | |
| | Calcium hydroxide | part by mass | | 6 | | 6 |
| | Magnesium oxide | part by mass | | 3 | | 3 |
| Crosslinking characteristics (MDR) | Measurement temperature | | 160°C × 60 min | 160°C × 60 min | - | - |
| | Maximum torque (MH) | dNm | 16.6 | 11.7 | - | - |
| | Optimum crosslinking time (T90) | min | 42.0 | 7.9 | - | - |

(continued)

| | | | Example 5 | Comparative Example 3 | Example 6 | Comparative Example 4 |
|---|---|---|---|---|---|---|
| Crosslinking characteristics (RPA2000) | Measurement temperature | | - | - | 160°C × 20 min | 160°C × 20 min |
| | Maximum torque (MH) | dNm | - | - | 150 | 170 |
| | Optimum crosslinking time (T90) | min | - | - | 12.5 | 8.0 |
| Forming conditions | Primary crosslinking | | 160°C × 60 min | 160°C × 60 min | 160°C × 20 min | 160°C × 20 min |
| | Secondary crosslinking | | none | none | 230°C × 24 h | 230°C × 24 h |
| Ordinary-state properties | Tensile strength | MPa | 10.1 | 122 | 166 | 17.1 |
| | Elongation at break | % | 280 | 370 | 260 | 270 |
| | Hardness (peak) | - | 68 | 68 | 72 | 71 |
| | Hardness (after 3 s) | - | 62 | 60 | 64 | 66 |
| Nitric acid resistance (1) | Rate of volume change | % | 20 | 86 | 10 | 61 |

[Table 3]

Table 3

| | | | Example 7 | Example 8 |
|---|---|---|---|---|
| Formulation | Fluoroelastomer A | part by mass | 100 | |
| | Fluoroelastomer B | part by mass | | 100 |
| | MT carbon | part by mass | 20 | 20 |
| | Co-cross-linking agent A | part by mass | 4 | 4 |
| | Peroxide cross-linking agent A | part by mass | 1.5 | 1.5 |
| Forming conditions | Primary crosslinking | | 160°C × 10 min | 160°C × 10 min |
| | Secondary crosslinking | | 180°C × 4 h | 180°C × 4 h |
| Ordinary-state properties | Tensile strength | MPa | 23.5 | 23.1 |
| | Elongation at break | % | 300 | 570 |
| | Hardness (peak) | - | 69 | 61 |
| | Hardness (after 3 s) | - | 67 | 56 |
| Nitric acid resistance (2) | Rate of volume change | % | 1 | 1 |

Claims

1. A crosslinkable composition for use in a member of an air management system for an ammonia combustion engine,

the composition comprising a fluoroelastomer and a cross-linking agent, and
further

(a) comprising a hydrotalcite as an acid acceptor, or

(b) comprising or not comprising an acid acceptor other than a hydrotalcite as an acid acceptor, wherein the content of the acid acceptor other than the hydrotalcite is 0 parts by mass or more and less than 1 part by mass based on 100 parts by mass of the fluoroelastomer.

2. The crosslinkable composition according to claim 1, wherein, in the case of (a), the content of the hydrotalcite is 0.1 to 10 parts by mass based on 100 parts by mass of the fluoroelastomer.

3. The crosslinkable composition according to claim 1 or 2, wherein, in the case of (a), the content of the acid acceptor other than the hydrotalcite is 0 parts by mass or more and less than 1 part by mass based on 100 parts by mass of the fluoroelastomer.

4. The crosslinkable composition according to claim 1, wherein, in the case of (b), the content of the hydrotalcite is less than 0.1 parts by mass based on 100 parts by mass of the fluoroelastomer.

5. The crosslinkable composition according to claim 1 or 4, wherein, in the case of (b), the acid acceptor other than the hydrotalcite is at least one selected from the group consisting of a metal oxide, a metal hydroxide, an alkali metal silicate, and a weak acid metal salt.

6. The crosslinkable composition according to any one of claims 1 to 5, wherein the fluoroelastomer is a peroxide-crosslinkable fluoroelastomer.

7. The crosslinkable composition according to any one of claims 1 to 6, wherein the fluoroelastomer is at least one selected from the group consisting of vinylidene fluoride-based fluoroelastomers, tetrafluoroethylene/propylene-based fluoroelastomers, and perfluoroelastomers.

8. The crosslinkable composition according to any one of claims 1 to 7, wherein the fluoroelastomer is at least one selected from the group consisting of a fluoroelastomer (1) containing vinylidene fluoride unit and a fluorine-containing monomer (1) unit represented by the following general formula (1) :

$$CHX^1=CX^2Rf \qquad (1)$$

wherein one of $X^1$ and $X^2$ is H and the other is F, and Rf is a linear or branched fluoroalkyl group having 1 to 12 carbon atoms; and a tetrafluoroethylene/propylene-based fluoroelastomer.

9. The crosslinkable composition according to claim 8, wherein the fluorine-containing monomer (1) is 2,3,3,3-tetrafluoropropene.

10. The crosslinkable composition according to claim 8 or 9, wherein the fluoroelastomer (1) has at least one of iodine atom and bromine atom, wherein the total content of iodine and bromine atoms is 0.001 to 10 mass%.

11. The crosslinkable composition according to any one of claims 1 to 10, wherein the cross-linking agent is a peroxide.

12. The crosslinkable composition according to claim 11, further comprising a co-cross-linking agent.

13. A member of an air management system for an ammonia combustion engine,
the member comprising a crosslinked fluoroelastomer obtained by crosslinking the crosslinkable composition according to any one of claims 1 to 12.

14. Use of the crosslinkable composition according to any one of claims 1 to 12, for forming a member of an air management system for an ammonia combustion engine.

## INTERNATIONAL SEARCH REPORT

| | |
|---|---|
| | International application No.<br>**PCT/JP2022/044426** |

**A. CLASSIFICATION OF SUBJECT MATTER**

*F02M 35/10*(2006.01)i; *C08K 3/01*(2018.01)i; *C08K 3/26*(2006.01)i; *C08K 5/14*(2006.01)i; *C08L 27/12*(2006.01)i; *F02M 25/00*(2006.01)i

FI: F02M35/10 101N; C08K3/26; C08K3/01; C08L27/12; C08K5/14; F02M25/00 F

According to International Patent Classification (IPC) or to both national classification and IPC

**B. FIELDS SEARCHED**

Minimum documentation searched (classification system followed by classification symbols)

F02M35/10; C08K3/01; C08K3/26; C08K5/14; C08L27/12; F02M25/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2017-500397 A (3M INNOVATIVE PROPERTIES COMPANY) 05 January 2017 (2017-01-05)<br>paragraphs [0011], [0015]-[0017], [0024]-[0025], [0035], [0044], [0047] | 1-7, 10-11, 13-14<br><br>8-9, 12 |
| Y | JP 2016-131953 A (DAIKIN IND LTD) 25 July 2016 (2016-07-25)<br>claims, paragraphs [0029], [0031], [0095]-[0096], [0105] | 8-9, 12 |
| A | JP 2006-513304 A (3M INNOVATIVE PROPERTIES COMPANY) 20 April 2006 (2006-04-20)<br>entire text, all drawings | 1-14 |
| A | WO 2019/098062 A1 (DAIKIN IND LTD) 23 May 2019 (2019-05-23)<br>entire text, all drawings | 1-14 |
| A | WO 2019/098064 A1 (DAIKIN IND LTD) 23 May 2019 (2019-05-23)<br>entire text, all drawings | 1-14 |

| ☐ Further documents are listed in the continuation of Box C. | ✓ See patent family annex. |
|---|---|

| | | |
|---|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family | |

| Date of the actual completion of the international search | Date of mailing of the international search report |
|---|---|
| **31 January 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/044426**

| Patent document cited in search report | | | Publication date (day/month/year) | Patent family member(s) | | | Publication date (day/month/year) |
|---|---|---|---|---|---|---|---|
| JP | 2017-500397 | A | 05 January 2017 | US | 2016/0289414 | A1 | |
| | | | | paragraphs [0012], [0016]-[0018], [0025]-[0026], [0036], [0045], [0048] | | | |
| | | | | WO | 2015/088940 | A1 | |
| | | | | KR | 10-2016-0097234 | A | |
| | | | | CN | 105980850 | A | |
| JP | 2016-131953 | A | 25 July 2016 | (Family: none) | | | |
| JP | 2006-513304 | A | 20 April 2006 | US | 2004/0142135 | A1 | |
| | | | | entire text, all drawings | | | |
| | | | | US | 2005/0147828 | A1 | |
| | | | | WO | 2004/067618 | A1 | |
| | | | | CN | 1738854 | A | |
| WO | 2019/098062 | A1 | 23 May 2019 | US | 2020/0392323 | A1 | |
| | | | | entire text, all drawings | | | |
| | | | | EP | 3696212 | A1 | |
| | | | | CN | 111344336 | A | |
| WO | 2019/098064 | A1 | 23 May 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013534271 W
- JP 2011522921 W
- JP 2003277563 A
- JP 2018514627 W
- WO 9724381 A
- JP 61057324 A

- JP 4008118 A
- JP 5013961 A
- JP 11147891 A
- JP 2010150563 A
- WO 2012023485 A

**Non-patent literature cited in the description**

- *CHEMICAL ABSTRACTS,* 2321-07-5